# EUROPEAN PATENT APPLICATION

(11) **EP 2 129 145 A1**
(43) Date of publication of application: **02.12.2009**
(21) Application number: 08711994.7
(22) Date of filing: 26.02.2008
(51) Int. Cl.: H04Q 7/36, H04L 12/56

(54) **WIRELESS CONTROL SIGNAL GENERATING METHOD, WIRELESS BASE STATION DEVICE, AND MOBILE STATION**

(30) Priority: 28.02.2007 JP 2007050834
(71) Applicant: NTT DoCoMo, Inc., Chiyoda-ku Tokyo 100-6150 (JP)
(72) Inventor: HARADA, Atsushi, Tokyo 100-6150 (JP); ISHII, Minami, Tokyo 100-6150 (JP)
(74) Representative: HOFFMANN EITLE
(86) International application number: PCT/JP2008/053310
(87) International publication number: WO 2008/105412

(57) **Abstract**

A method of generating a control signal is disclosed. The method includes the steps of: generating one or more control messages to be transmitted; and multiplexing the one or more control messages to generate a control message block to generate the control signal to be transmitted in a transport channel, wherein the control message block varies in length according to the number of control messages multiplexed and the size of the control messages; and wherein information on the number of control messages multiplexed and/or the size of the respective control messages is not included in the control signal.

## Description

### BACKGROUND OF THE INVENTION

### 1. Field of the Invention

The present invention generally relates to radio communications control techniques, and specifically relates to a configuration of a control signal for implementing a control process at the MAC (Medium Access Control) layer, and a process of generating such a control signal.

### 2. Description of the Related Art

In Enhanced Uplink, included in UMTS Rel. 7, one of the Third Generation Mobile Communications Systems, Scheduling Information (SI) is specified for E-DCH (Enhanced-Dedicated Channel) as an example of a radio control signal at the MAC layer using a MAC control message.

This is a control message for a mobile station (UE) to report own-station scheduling information SI to a base station (NodeB), which message includes four fixed information elements:
total E-DCH buffer status (TEBS) - 5 bits;
highest priority logical channel ID (HLID) - 4 bits;
highest priority logical channel buffer status (HLBS) - 4 bits; and
uplink power headroom (UPH) - 5 bits.

As needed, the above-described scheduling information SI is multiplexed in a MAC-e PDU and transmitted. At that time, the above-described four information elements are reported at a fixed number of bits of 18 (see Non-patent document 1).

Even in a further evolved version of UMTS, which is LTE (Long Term Evolution), some of the radio control functions are arranged completely within the MAC layer to achieve a reduction in control delay. For instance, that the following two control messages be transmitted as MAC control messages (signaling) is being proposed (for example, see Non-patent document 2).
(1) Timing Advance (T/A)
(2) RLC related control PDU

However, transmission of these control messages needs further study (FFS: for further study), so that the specific formats of the MAC control message or the other uses have not materialized as of this time.
Non-patent Document 1: 3GPP TS25.321 v7.2.0
Non-patent Document 2: 3GPP TS36.300 Annex. B

### SUMMARY OF THE INVENTION

### [Problem(s) to be solved by the Invention]

As the variety of use increases, the size of information reported in a MAC control message ceases to be constant. Moreover, the type and total number of control messages multiplexed in a MAC control PDU become variable. Then, a signal configuration, taking into account that the MAC control PDU becomes variable, needs to be considered.

Generally, a method is considered that includes, in a header of the MAC control PDU, information on the message length and the number multiplexed for each of multiple types of control messages. However, with this method, a problem arises that overhead included in a MAC header increases in order to report the control messages multiplexed.

Then, a problem to be solved in the present invention is to provide a novel technique for creating a control signal configured to reduce header overhead to a minimum even when an unspecified number of and/or differently-sized control messages are multiplexed.

Moreover, another problem to be solved is to provide a radio base station apparatus and a mobile station that are configured to be suitable for transmission and reception of the control signal as described above.

### [Means for solving the Problem]

In order to solve the problem, a method of generating a control signal is provided as a first aspect. The method of generating the control signal includes the steps of:
(a) generating one or more control messages to be transmitted; and
(b) multiplexing the one or more control messages to generate a control message block to generate a control signal to be transmitted in a transport channel, wherein the control message block varies in length according to a number of control messages multiplexed and/or the size of the respective control messages; and wherein
   information on the number of control messages multiplexed and/or the size of the respective control messages is not included in the control signal.

A control signal may be generated that has added, to the control message block, a header including information indicating what the control signal is related to. Alternatively, information on what the control signal is related to may be transmitted in an auxiliary physical control channel transmitted as an accompaniment to the transport channel.

As an example, the control message is a set of random access responses which are generated in response to random access from one or more mobile stations, the random access response including a preamble sequence used by the respective mobile station and necessary information in response to it. The preamble sequence makes it possible to identify the mobile station which has made the random access and the size of the necessary information.

In another example, the control message is a buffer status report corresponding to each of one or more logical channel groups currently used by the mobile station. The buffer status report may be configured as fixed-length information or variable-length information. The former case makes it possible to identify the number of the multiplexed buffer status reports based on the fixed length and the size of the control signal. In the latter case, the control message includes a logical channel group ID and a buffer status report field corresponding to it, collating in advance the length of the buffer status report field corresponding to the logical channel group ID.

In a second aspect, a configuration of a radio base station apparatus is provided. The radio base station apparatus includes:
(a) a random access response generator for generating, when random access signals are received from one or more mobile stations, one or more responses to the random access signals; and
(b) a control signal generator for multiplexing the one or more responses to generate the control message block to generate a control signal, wherein the control signal generator does not include, in the control signal, information on the number of random access responses multiplexed and/or the size of the respective random access responses.

In a third aspect, a mobile station which is operable to respond to the base station as described above is provided. The mobile station includes:
(a) a determining unit for determining, when a control signal transmitted from a base station in a transport channel is received, whether the control signal is a random access response, and determining, when the control signal is the random access response, whether a random access response is included that may be destined for own station based on a preamble sequence included in a control message block of the control signal; and
(b) a processor for analyzing, when the random access response is included that may be destined for the own station, the random access response which may be destined for the own station.

In a fourth aspect, a mobile station is provided that generates a variable-length control signal transmitted in a transport channel. The mobile station includes
(a) a buffer status report generator for generating a buffer status report indicating a held-in-buffer time for each of one or more logical channel groups presently used; and
(b) a control signal generator for multiplexing one or more buffer status reports to generate a control message block to generate a control signal to be transmitted in a transport channel,
wherein the control signal generator does not include, in the control signal, information on the number of multiplexed buffer status reports.

In a fifth aspect, a radio base station apparatus which is operable to respond to the base station as described above is provided. The radio base station apparatus includes:
(a) a determining unit for determining, when a variable-length control signal transmitted from a mobile station in a transport channel is received, whether the control signal is a buffer status report;
(b) a buffer status report processor for taking out, when the control signal is a buffer status report, held-in-buffer value information corresponding to one or more logical channel groups from a control message block of the control signal; and
(c) a scheduler for scheduling the mobile station based on the held-in-buffer value.

### [Advantage of the Invention]

The features as described above makes it possible to generate a control signal in which one or more control messages are multiplexed, of which control messages the number multiplexed and/or the message sizes are indefinite, while reducing the header overhead of the control signal to a minimum.

### BRIEF DESCRIPTION OF THE DRAWINGS

FIG. 1A is a diagram illustrating a configuration of a MAC control PDU for an RA response according to a first embodiment of the present invention;
FIG. 1B is a diagram illustrating an exemplary variation of the MAC control PDU in FIG. 1A;
FIG. 2 is a diagram illustrating an exemplary configuration of a MAC header of the MAC control PDU in FIG. 1;
FIG. 3 is a diagram illustrating exemplary DDI fields included in the MAC header in FIG. 2;
FIG. 4 is a diagram illustrating an exemplary configuration of an RA response according to an RACH transmit objective;
FIG. 5 is a diagram illustrating operational flows of eNB and UE of the first embodiment;
FIG. 6 is a block diagram illustrating an eNB and a UE of the first embodiment;
FIG. 7A is a diagram illustrating a configuration of a MAC control PDU for a buffer status report according to a second embodiment of the present invention;
FIG. 7B is a diagram illustrating an exemplary variation of the MAC control PDU in FIG. 7A;
FIG. 8A is a diagram illustrating an exemplary configuration of a MAC control PDU for transmitting a buffer status report at the time of restarting data transmission;
FIG. 8B is a diagram illustrating an exemplary variation of the MAC control PDU for reporting a buffer status report at the time of restarting data transmission;
FIG. 9 is a diagram illustrating operational flows of an eNB and a UE of the second embodiment; and
FIG. 10 is a block diagram illustrating the eNB and the UE of the second embodiment.

### DESCRIPTION OF THE PREFERRED EMBODIMENTS

### [Description of Notations]

10, 10A MAC control PDU (control signal)
11 MAC header
12 control message block
13 padding
15 C-RNTI
30 base station (eNB)
31 MAC PDU generator
32 RA response generator
33 MAC control PDU generator
34 L1/L2 control channel generator
35 transmitter
36 receiver
37 RA preamble extracting unit
41 MAC PDU processor
42 buffer status report processor
43 MAC control PDU determining unit
45 scheduler
50 mobile station (UE)
51 MAC PDU processor
52 RA response processor
53 MAC control PDU determining unit
54 L1/L2 control channel processor
55 receiver
56 transmitter
57 RA preamble generator
58 C-RNTI storage
61 MAC PDU generator
62 buffer status report generator
63 MAC control PDU generator
65 buffer status monitor
66 uplink data restart determining unit

### [Best Mode of Carrying Out the Invention]

A description is given below with regard to preferred embodiments of the present invention, with reference to the drawings.

### A first embodiment

In the first embodiment, an example is explained of multiplexing, in a MAC control PDU, random access (RA) responses to be sent to multiple mobile stations (UEs) from a base station (eNB). In the embodiment, the MAC control PDU, which is an example of a control signal processed completely within a MAC layer, is transmitted to one or more UEs in a downlink shared channel (DL-SCH), which is a transport channel. Each of the RA responses destined for one or more UEs that is multiplexed in a control signal is an example of a control message included in the control signal.

When multiple UEs access an eNB in a random access channel (RACH) in a radio subframe, the base station (eNB) includes different RA responses for the UEs to transmit the results. In this case, information on the number of multiplexed RA responses (control messages) and the length of the RA responses is not included in a MAC header, but is included in a message block of the MAC control PDU in a manner identifiable by the UE to transmit the results.

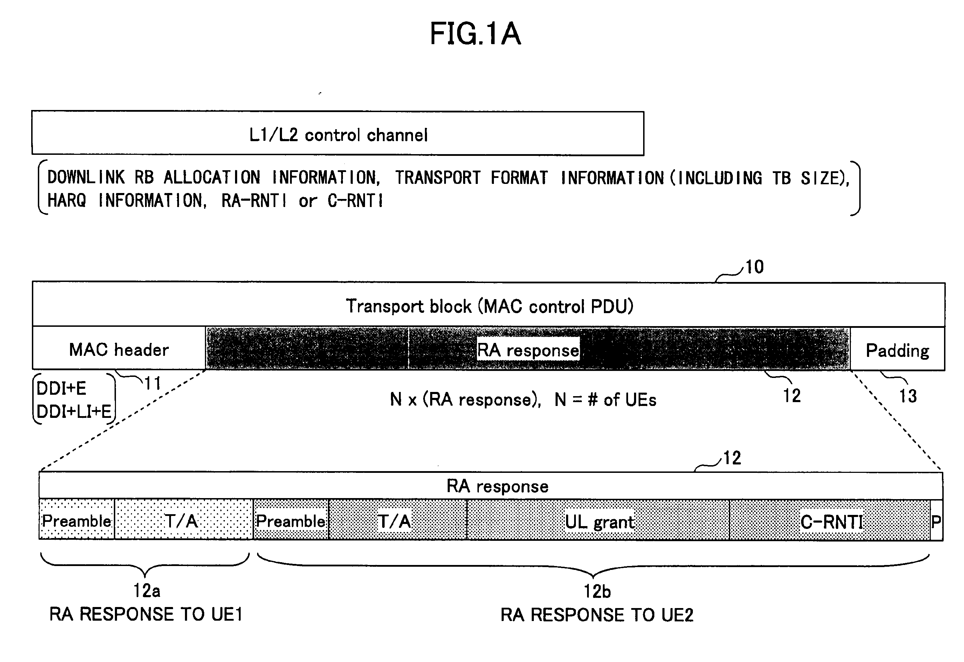

FIG. 1A is a drawing illustrating an exemplary configuration of the MAC control PDU of the first embodiment of the invention. In this example, RA responses to UE1 and UE2 are multiplexed in a MAC control PDU 10 to transmit the multiplexed result in DL-SCH. To accompany a downlink shared channel, an L1/L2 control channel, which is a physical control channel, is generated and transmitted. The L1/L2 control channel transmits downlink resource block (RB) allocation information of a corresponding transport channel (DL-SCH in this example), transport format information, Hybrid ARQ information, and ID information such as cell-level user ID (C-RNTI) or cell-level UE group ID. As described below, information transmitted in a corresponding transport channel may be a RA-RNTI, which shows that it is an RA response, in lieu of C-RNTI.

Transport format information includes information on a block size (TB size) of a MAC control PDU 10 transmitted in the transport channel. In the present embodiment, a MAC header size, a total of individual RA response sizes (control message block size), and the total of padding bit lengths are reported in order to determine, for how many UEs the RA responses are included in the MAC control PDU.

The MAC control PDU 10, which makes up one TB, includes a MAC header 11, a control message block 12, and padding 13 for aligning the size of the MAC control PDU 10 per octet. The padding 13 is not needed if the size of the MAC control PDU 10 and/or the control message block 12 itself is octet-aligned (multiple of 8 bits).

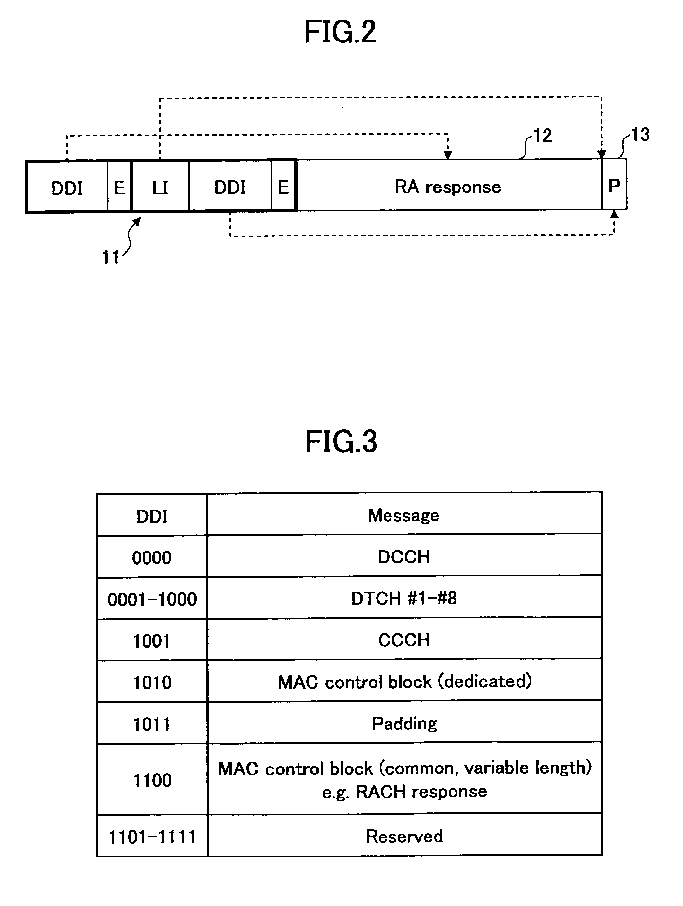

The MAC header 11, as shown in FIG. 2, includes at least a DDI (Data Description Indicator) field, an LI (Length Indicator) field, and an E (Extension) field. DDI is an indicator for identifying what the MAC control PDU 10 includes. FIG. 3 shows an exemplary DDI field.

In the example in FIG. 3, identification of a logical channel, identification of a control block, and the presence of padding are indicated according to the value the DDI field takes. In the present embodiment, the MAC control PDU 10 is a signal conveying an RA response as a variable length control message, so that the first DDI in FIG. 2 has a value of "1100". Moreover, the MAC control PDU 10 includes a padding 13, so that the second DDI has "1011", indicating padding.

LI designates the length of the RA response as a whole, or the length of the padding 13 in bits or octets. This value is variable. E field is a one bit field (flag) distinguishing whether a subsequent block is a control message block 12, or another set (LI+DDI+E), which is a part of a MAC header 11. In this example, the E flag behind the first DDI specifies a value (for example, "1") indicating that the following block is also a part of the MAC header 11. The E flag behind the second DDI specifies a value (for example, "0") indicating that the control message block 12 follows.

In this way, the MAC header 11 only includes information indicating what the MAC control PDU is related to, and does not include information on the number and size of individual control messages included in the message block.

Returning to FIG. 1A, a control message block 12 of a MAC control PDU 10 includes an RA response 12a destined for UE1 and an RA response 12b destined for UE2. The RA response 12a destined for UE1 and the RA response 12b destined for UE2 differ from each other in their message length. This is because the RACH transmit objective of UE1 and the RACH transmit objective of UE2 differ and constituting elements of the corresponding RA responses also differ.

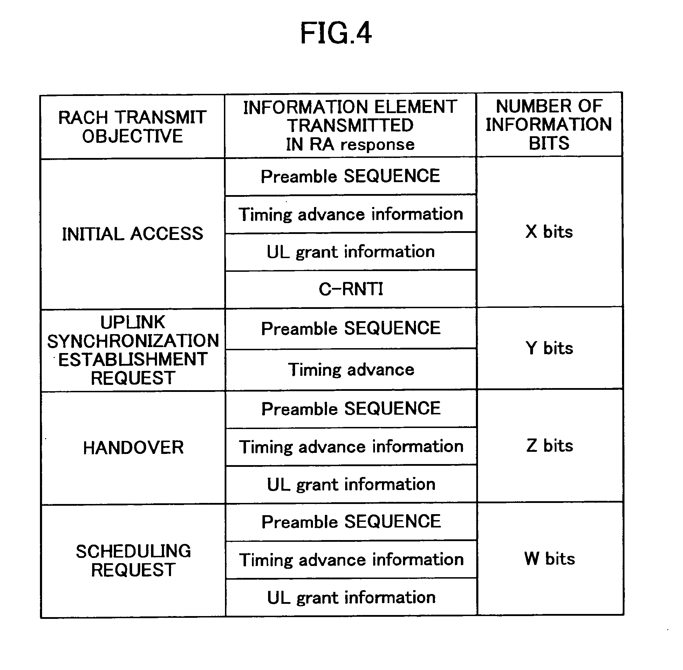

FIG. 4 is a diagram illustrating an exemplary configuration of an RA response according to a RACH transmit objective. RACH is a channel which is randomly transmitted from UE to eNB at the times of initial access of the UE, uplink synchronization establishment request, handover, and scheduling request. For random access, each UE generates and transmits a preamble sequence according to its RACH transmit objective. The base station eNB uses the received preamble sequence as UE identifying information, as the UE identifying information sets are not known at the time RACH is received.

The RA response to the RACH for the initial access includes at least a preamble sequence, timing advance (T/A) information, UL grant information on resource allocation uplink, and C-RNTI (Cell Radio Network Temporary Identifier), which is an ID of a UE at the cell level managed by the network; the number of information bits (the message length) is X bits.

The RA response to the uplink synchronization establishment request includes at least preamble sequence and timing advance information, and the number of information bits is Y bits. The RA response to RACH with an objective of handover, including at least a preamble sequence, timing advance information, and UL grant information, has a message length of Z bits. The RA response to the scheduling request, also including at least a preamble sequence, timing advance information, and UL grant information, has a message length of W (may be the same as Z) bits.

In the example of FIG. 1A, the RA response to UE1 is an RA response to an uplink synchronization establishment request, while the RA response to UE2 is an RA response of X bits to the initial access. MAC multiplexing is not applied to the RA response. In other words, the MAC control PDU does not include a control message block other than other user data and RA responses.

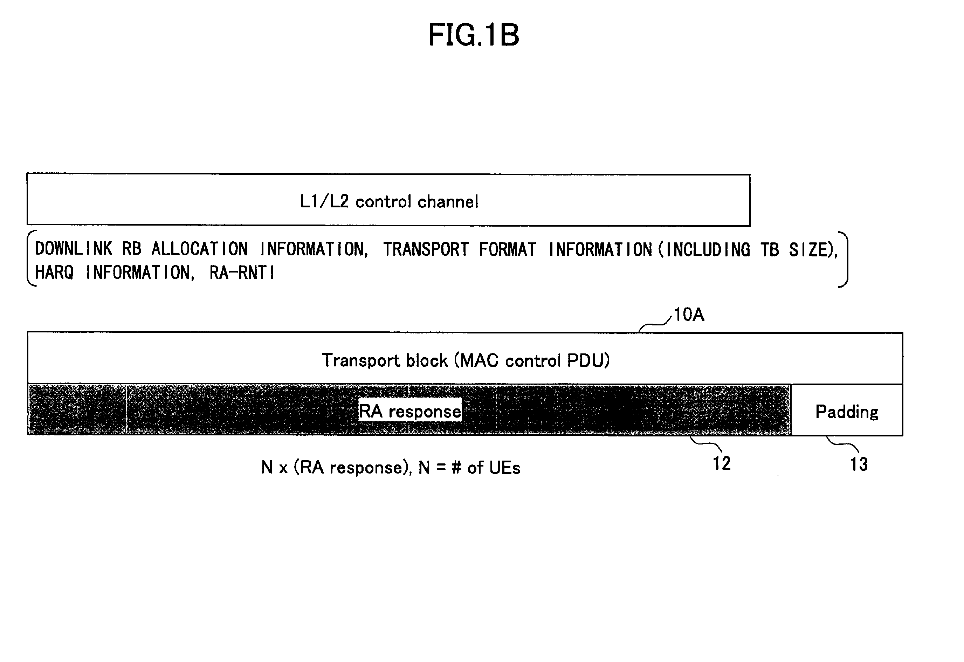

FIG. 1B is a diagram illustrating a configuration of a MAC control PDU 10A as an exemplary variation of the configuration in FIG. 1A. In the configuration in FIG. 1B, the MAC header 11 is omitted. In this case, the L1/L2 control channel transmits RA-RNTI as ID information indicating that it is a RA response to one or more UEs, instead of UE identifying information (C-RNTI, etc.) for allocating a resource block to an individual UE. Each UE can recognize, by an L1/L2 control channel, that this MAC control PDU 10A relates to an RA response, so that the MAC header 11 may be omitted. Of course, RA-RNTI can also be transmitted in the L1/12 control channel while maintaining a MAC header 11A in FIG. 1A.

A UE which has received a MAC control PDU 10 or MAC control PDU 10A first looks at an identifier (RA-RNTI) included in the MAC header 11 or L1/L2 control channel to recognize that the MAC control PDU is to report the RA response. Then, it can look at a preamble sequence included in a control message block 12 to identify a RACH transmit objective and determine the message length of the RA response identified with the preamble sequence. UE also can use the preamble sequence to determine whether an RA response which may be destined for the own station is included in the MAC control PDU 10.

According to the feature as described above, each UE can scan preamble information of the control message block 12 to see these information sets without including, in the MAC header 11, information related to the size of multiplexed individual RA responses or the number of them multiplexed.

When the eNB receives a RACH only from a single UE in a radio sub frame, only one RA response destined for one UE is included in the MAC control PDU 10. Even in such a case, control messages of different message lengths are included according to the RACH transmit objective. Thus, the length of the MAC control PDU 10 becomes variable. The UE can see the type and size of the control message (RA response) from the preamble sequence of the control message block 12.

As the RA response for the initial access, all of the RA responses may be configured with the four information elements rather than according to the RACH transmit objective. In this case, each RA response becomes fixed in length, but the MAC control PDU 10 becomes variable in length according to the number of UEs for which RA responses are multiplexed.

Preamble sequences destined for multiple UEs may be arranged in ascending or descending order. In this case, when a value bigger than or smaller than the preamble sequence sent by the own station is detected, the UE can determine that the RA response which may be destined for the own station is not included and to stop further scanning.

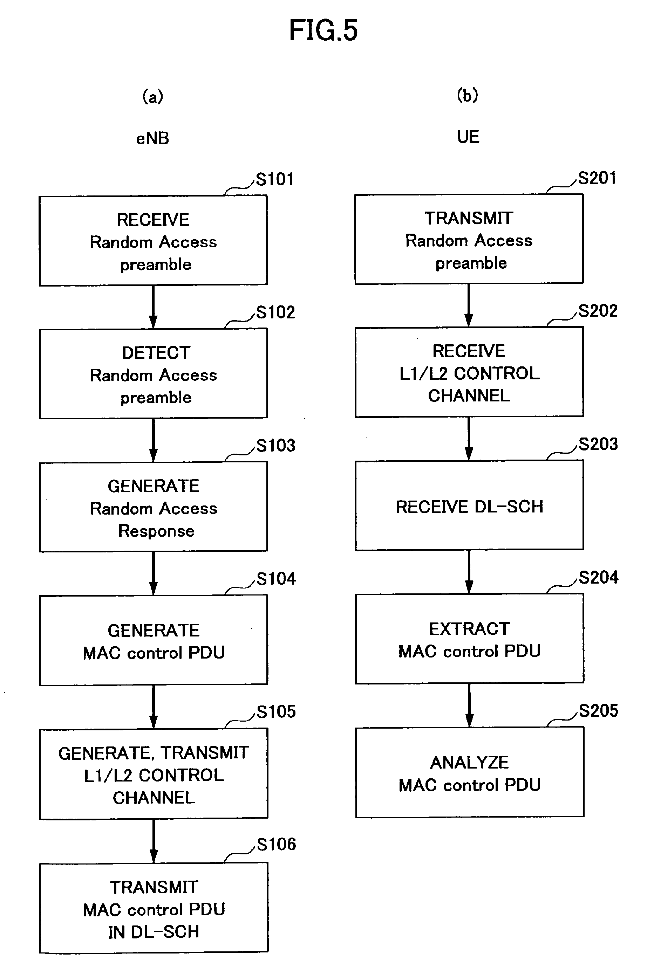

FIG. 5 (a) and 5 (b) are operational flows for the above-described base station (eNB) and mobile station (UE). In FIG. 5 (a), the base station receives a RACH including a random access preamble sequence from one or more UEs located in an area in a radio sub frame (S101). Random access preamble sequences per UE are detected from the received RACH (S102), and RA responses corresponding to the transmit objectives are generated according to the preamble sequences detected (S103). The generated RA responses are multiplexed and padding is added, if necessary, to generate a MAC control PDU (S104). Here, as information for inserting into a MAC header, it is sufficient to only include information identifying that the MAC control PDU is a control signal for transmitting a RA response, and information indicating the presence of any padding, so that information on the number of RA responses multiplexed and information on the message length of each RA response are not included.

Moreover, a base station generates and transmits an L1/L2 control channel (S105). In the L1/L2 control channel, TB size information on the MAC control PDU, and downlink RB allocation information indicating a resource block allocated to a transport channel for transmitting the MAC control PDU are included. Moreover, in the L1/L2 control channel, RA-RNTI, which is an identifier for identifying that it is a RA response to a UE which has transmitted a RA preamble, may be included in lieu of C-RNTI, which is information identifying a UE that is used for a normal data allocation for allocating a resource block to an individual UE. Accompanying transmission of the L1/L2 control channel, the generated MAC control PDU is transmitted in DL-SCH, for example (S106).

At the mobile station (UE) side, as shown in FIG. 5(b), when random access is needed, the preamble sequence is generated and transmitted according to its objective (S201). After transmission, the L1/L2 control channel is received from a base station (S202), and RB information allocated to a corresponding transport channel is extracted to receive DL-SCH (S203). Here, TB size information is also extracted from the L1/L2 control channel. The MAC control PDU is extracted from the DL-SCH (S204), and the extracted MAC control PDU is analyzed (S205) . An example of analyzing the MAC control PDU is as explained with reference to FIG. 1A.

In this way, eNB can, while reducing the overhead of the MAC header to a minimum, transmit a control signal (MAC control PDU) in which control messages destined for multiple UEs are multiplexed, allowing each UE to performs within a MAC layer completely the processes of detecting and analyzing the control messages included in the control signal.

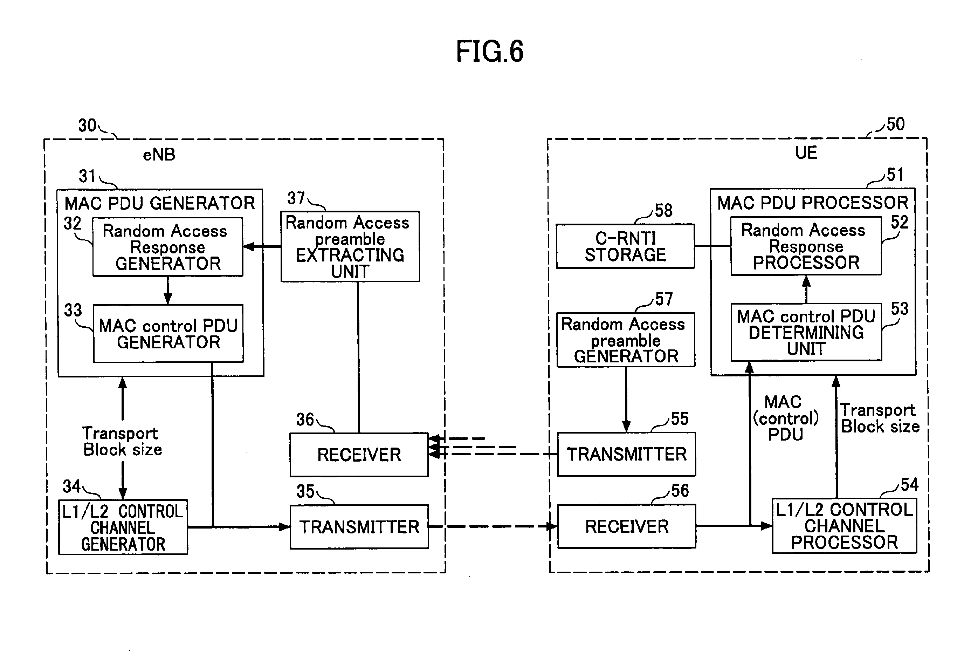

FIG. 6 is a block diagram of a base station (eNB) 30 and a mobile station (UE) 50 of the first embodiment. The base station 30 has a MAC PDU generator 31, an L1/L2 control channel generator 34, a transmitter 35, a receiver 36, and a RA (random access) preamble extracting unit 37. The MAC PDU generator 31 includes a RA (random access) response generator 32 and a MAC control PDU generator 33.

When a RACH is received at the receiver 36 from one or more UEs at a certain timing (in a radio sub frame), a random access preamble of each UE is extracted at the RA preamble extracting unit 37. The RA response generator 32 generates an RA response the content of which is according to the corresponding preamble as shown in FIG. 4. The MAC control PDU generator 33 multiplexes the generated RA responses, and adds a MAC header indicating that it is the RA response to generate a MAC control PDU as shown in FIG. 1A. In addition, at the L1/L2 control channel generator 34, the L1/L2 control channel, which is an accompanying physical control channel, is generated and the TB size of the MAC control PDU and downlink RB information are inserted. When the MAC control PDU generator 33 generates a MAC control PDU, which does not require a MAC header 11 as in FIG. 1B, the L1/L2 control channel generator 34 includes, in the L1/L2 channel, an RA-RNTI, which indicates that what is transmitted in a corresponding transport channel (DL-SCH) is an RA response. The MAC control PDU is transmitted from the transmitter 35, together with the L1/L2 control channel.

The mobile station (UE) 50 has a MAC PDU processor 51, an L1/L2 control channel processor 54, a transmitter 55, a receiver 56, a random access (RA) preamble generator 57, and a C-RNTI storage 58. The MAC PDU processor 51 has an RA response processor 52 and a MAC control PDU determining unit 53. When the UE 50 randomly accesses the eNB 30, the RA preamble processor 57 generates a preamble sequence according to the random access objective, and transmits a RACH from the transmitter 53. At the receiver 56, the L1/L2 control channel and DL-SCH, the corresponding transport channel, are received. The L1/L2 control channel processor 54 takes out TB block size information transmitted in the L1/L2 control channel and provides the taken out information to the MAC PDU processor 51.

On the other hand, the MAC control PDU transmitted in DL-SCH is provided to the MAC control PDU determining unit 53, where whether the RA response is destined for the UE 50 is determined. The method, as explained in association with FIGS. 1 and 2, determines whether a DDI field of the MAC header 11 indicates an RA response signal, and if so, looks at a preamble included in the message block 12 to determine whether there is an RA response which may be destined for the own station. Alternatively, whether the received MAC control PDU is an RA response is determined. Here, TB size information extracted from the L1/L2 control channel leads to knowing the message block size, and knowing for how many UEs the included RA responses are for. When the preamble sequence is arranged in an ascending or descending order, it is determined that, when a preamble sequence larger or smaller, respectively, than that sent by the own station is detected, an RA response which may be destined for the own station is not included, so that no further process is performed.

When a preamble which may be destined for the own station is included, a MAC control PDU is provided to the RA response processor 52. The RA response processor 52 analyzes and processes the RA response which may be destined for the own station. When an RA response to an initial access is received, an included C-RNTI is extracted to store the extracted result in the C-RNTI storage 58, so that this ID is subsequently used for communicating with the eNB.

Such features as described above make it possible to send RA responses destined for multiple UEs in one MAC control PDU with small overhead.

### A second embodiment

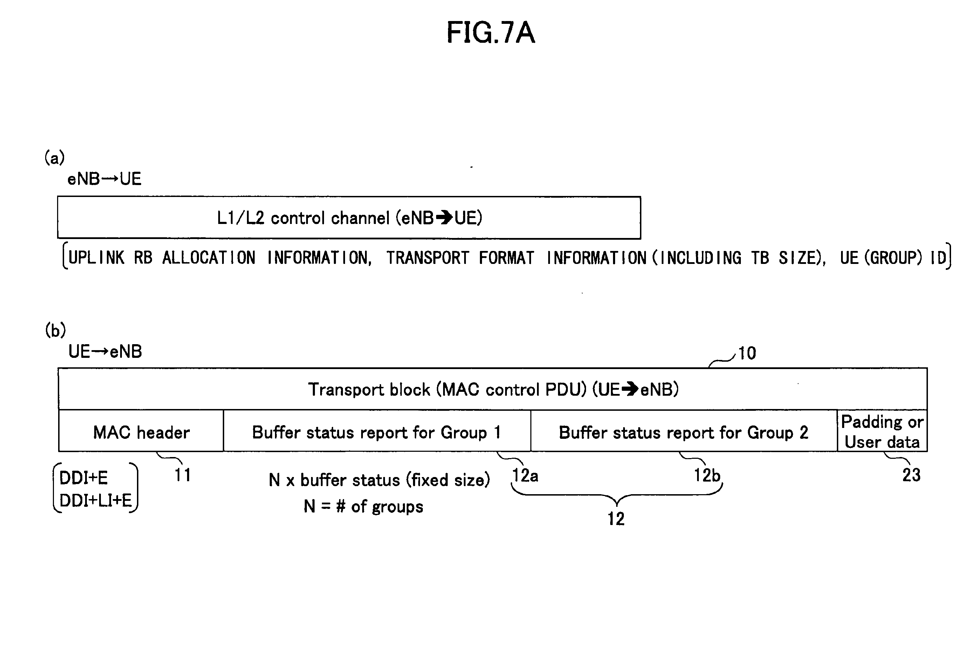

FIG. 7A is a schematic drawing illustrating a configuration of the MAC control PDU of the second embodiment of the invention. In the second embodiment, an amount held in a buffer is transmitted from a mobile station (UE) to a base station (eNB) in one MAC control PDU as a buffer status report value (control message) for each of one or more logical channel groups (service groups) currently used by the UE. The base station uses it as scheduling information (SI) to perform uplink scheduling.

In this case, a buffer status report value corresponding to each of one or more groups is fixed in length, but the total size of the buffer status report message of the MAC control PDU varies according to the number N of logical channel groups (service groups) to be reported.

For example, the logical channel group may be divided into a group requiring a high-priority service quality, a group requiring a medium-level service quality, and a group requiring a low-priority service quality. The UE may simultaneously receive services of two types of quality or may only receive a service of a single service group, so that a MAC control PDU may vary in length accordingly.

FIG. 7A (a) is an L1/L2 control channel transmitted by eNB at the time of scheduling. In the L1/L2 control channel, uplink resource unit (RU) allocation information for use in reporting scheduling information by UE, transport format information including a TB size, a cell-level UE ID, or a cell-level UE group ID is transmitted.

FIG. 7A (b) is a block diagram of a MAC control PDU 10, which is generated when a UE sends, to the eNB, a buffer status report (scheduling information). As in the first embodiment, the MAC control PDU 10 includes a MAC header 11, a control message block 12 and, as necessary, a block 23 for padding or for user data (DTCH/DCCH). As in FIG. 2, the MAC header 11 includes DDI and E fields. DDI has a specific value indicating that a buffer status report (scheduling information) is included. When padding or user data 23 is present, a DDI showing the presence and an LI field showing the message length of the buffer status reporting part or the length of padding or user data 23 are also included.

In an example in FIG. 7A (b), a buffer status report 12a of group I (high-priority group) and a buffer status report 12b of group 3 (low-priority group) are included in the control message block 12. Each buffer status report (control message) 12a, 12b, which includes a value identifying a group and a value indicating an amount held in the buffer, is fixed in length, but the MAC control PDU 10 is variable in length according to the number (the value of N, N=2 in this example) of logical channel groups currently used by the UE. The number N of the groups reported is uniquely determined from the TB size and the size of the fixed-length buffer status report.

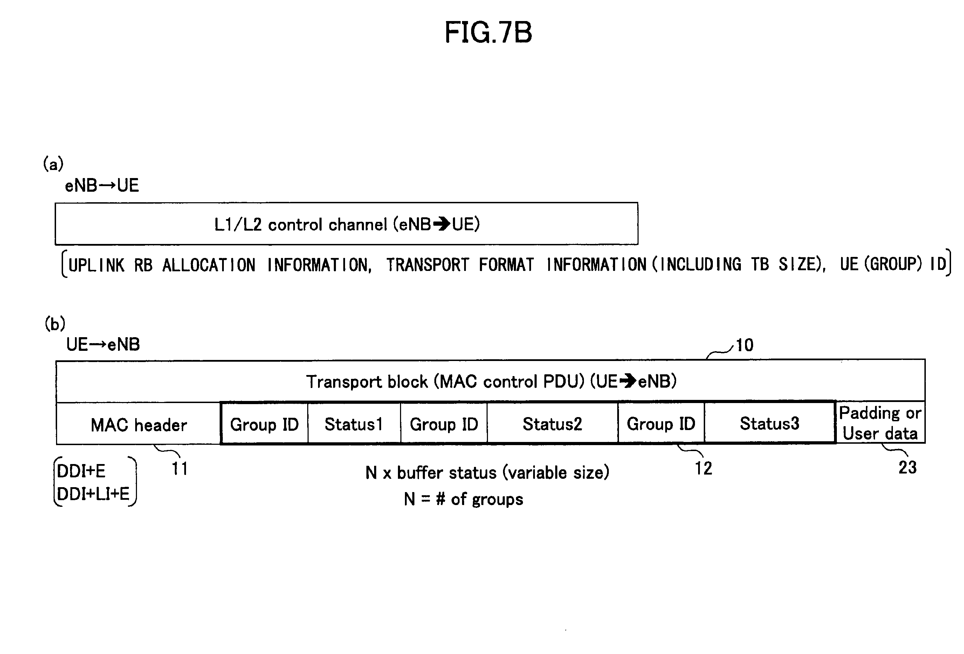

FIG. 7B shows, as an exemplary variation of FIG. 7A, a configuration when each buffer status report (control message) included in the control message block 12 is variable in length. In the exemplary configuration in FIG. 7B(b), the group ID is fixed in length, but the length of the field indicating the report value varies from one group to another. The length (size) of the report value field is collated in advance with the group ID, and the eNB which receives the MAC control PDU 10 may know the size of the corresponding report value field by looking at the group ID. Thus, it is not necessary to include, in the MAC header 11, information on the size of each control message.

The above described is an example such that data is currently transmitted and received between UE and eNB, with uplink synchronization being maintained between eNB and UE. However, data transmission and reception may be restarted with a request for establishing uplink synchronization from the UE when long-period intermittent transmitting and receiving are being conducted in an RRC_CONNECTED status, or when the uplink of the UE is out of synchronization due to individual uplink resources being released. In this case, a format different from normal buffer status reports of FIGS. 7A(b) and 7B(b) is used to transmit scheduling information.

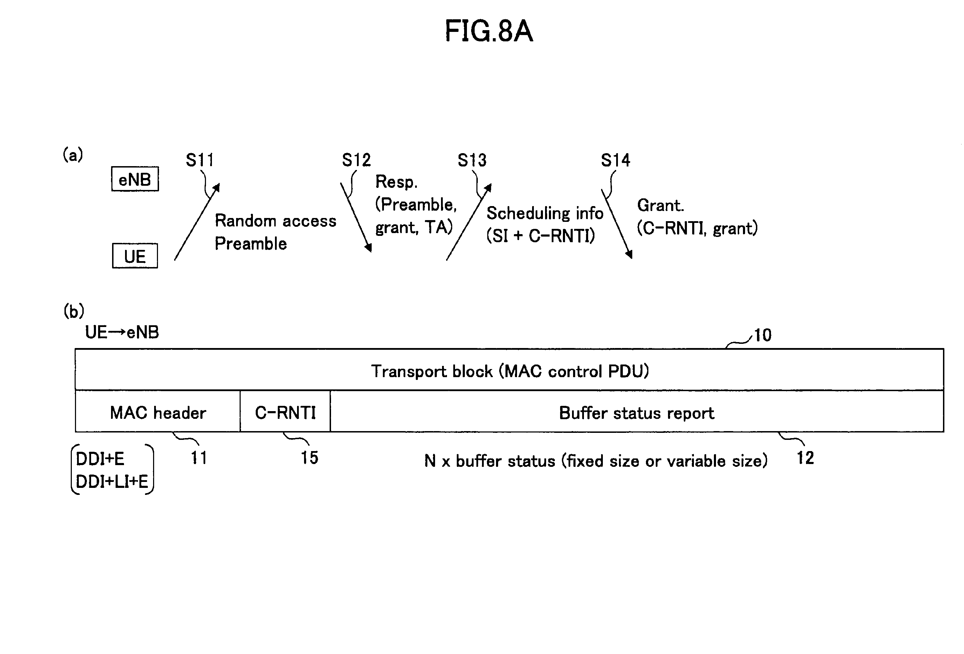

FIG. 8A is an exemplary configuration of a MAC control PDU for reporting buffer status at the time of data restart. As shown in FIG. 8A (a), the UE first transmits a RACH preamble to the eNB for making a request for establishing uplink synchronization (S11). The eNB determines from the preamble sequence that this RACH is transmitted for the objective of establishing uplink synchronization (S12). The RA response, as shown in FIG. 4, for example, includes a preamble sequence transmitted by the UE, UL grant information and timing advance information. The UE, upon receiving the RA response, uses an uplink RU allocated in the UL grant to transmit a MAC control PDU for reporting a buffer status report as scheduling information (S13). The MAC control PDU includes a C-RNTI, which is provided to the UE for identifying the UE, in addition to the buffer status report. Subsequently, the eNB uses this C-RNTI to report an allocation RU to the UE (S14). Please see 3GPP TSG RAN WG2 #57, R2-070781, 12^{th}-16^{th} February, 2007, St. Louis, USA for uplink synchronization in the RRC_CONNECTED status.

FIG. 8A (b) is an example of a configuration of a MAC control PDU 10A transmitted from a UE at the time of data restart. A MAC control PDU 10A includes a MAC header 11, a C-RNTI 15, and a control message block 12. Each control message included in the control message block 12 may be fixed in length as in FIG. 7A or variable in length as in FIG. 7B. C-RNTI 15 is always arranged before the control message block 12. This is because the eNB may recognize the C-RNTI to obtain from the eNB itself or a network, services from the groups the UE is currently receiving (the value of N). The MAC header 11 includes a DDI indicating that a C-RNTI is included and a DDI indicating that a buffer status report is included. Alternatively, a single DDI may indicate that both C-RNTI and buffer status report are included.

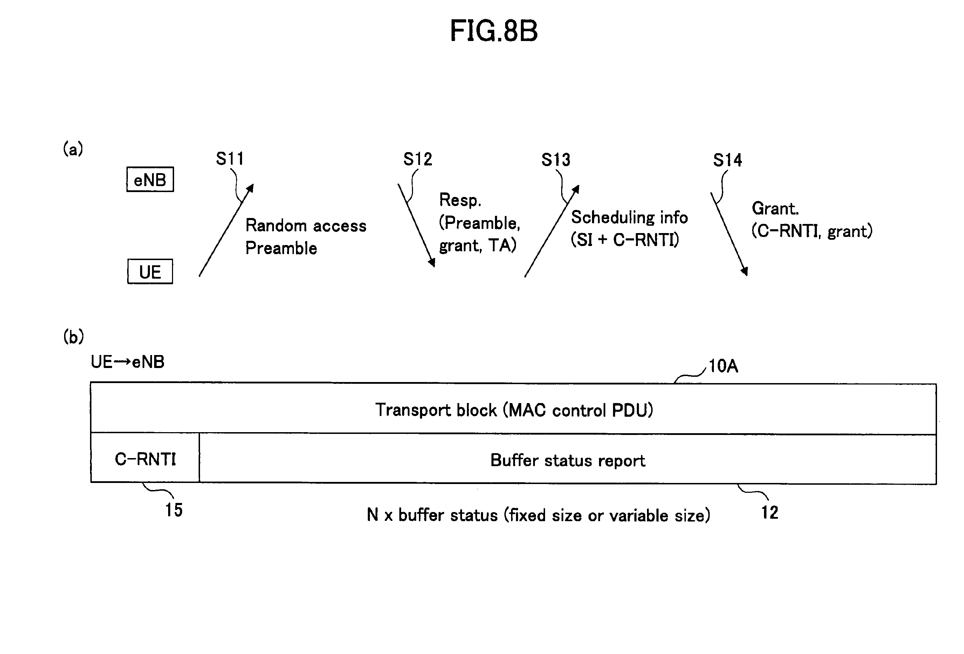

FIG. 8B is an exemplary variation of FIG. 8A. In FIG. 8B, the MAC header 11 is omitted in the MAC control PDU 10A. In this case, uplink information to be sent next by the UE using a resource allocated in the response in S12 is determined in advance to be a buffer status report (and the C-RNTI, which is an identifier for the UE). This makes it possible for the eNB to know the value of the buffer status report value per group of services currently received by the UE identified by the C-RNTI.

The above examples show that a buffer status report per logical channel group is included in the control message block 12. However, it may be configured such that, in addition to the buffer status report, an information element of a known size that is other than a buffer status report such as UPH is always included in the control message block 12.

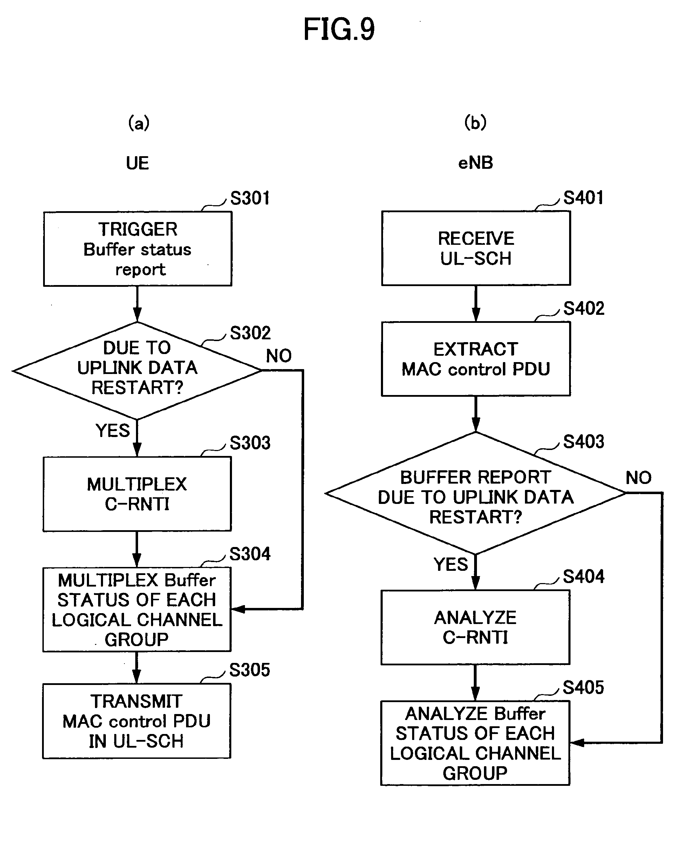

FIG. 9 is a flowchart indicating operational flows of UE and eNB of the second embodiment. As shown in FIG. 9 (a), the UE, for example, enters a scheduling information transmission process with a buffer status report trigger generated in the controller, for example (S301). First, it is determined whether the current buffer report is due to the uplink data restart (S302), and if the uplink start is after establishing the uplink synchronization (YES in S302), a C-RNTI provided at the present is multiplexed in the MAC control PDU (S303). Then, following the C-RNTI, the value of the buffer status report per logical channel group (service group) is multiplexed (S304).

If the present buffer status report is not due to uplink data restart (NO in S302), the process goes to step S304, and the buffer status reports of the groups are multiplexed without multiplexing the C-RNTI. Then, the generated MAC control PDU is transmitted in UL-SCH (S305).

FIG. 9(b) is an operation of the eNB of the second embodiment. When the eNB receives UL-SCH (S401), the MAC control PDU is extracted (S402). It is determined whether the MAC control PDU is a buffer report due to restart of uplink data from the DDI of the MAC header 11 or RA preamble received in advance (S403). If it is a buffer report due to the uplink data restart (YES in S403), C-RNTI is extracted from the MAC control PDU and analyzed (S404). In this way, the presence of the UE on the network may be identified and how many logical channel groups are being used by the UE on the current network (services of how many service groups are being received) may be known. Moreover, the buffer status of each logical channel group is analyzed (S405), based on which information scheduling is conducted.

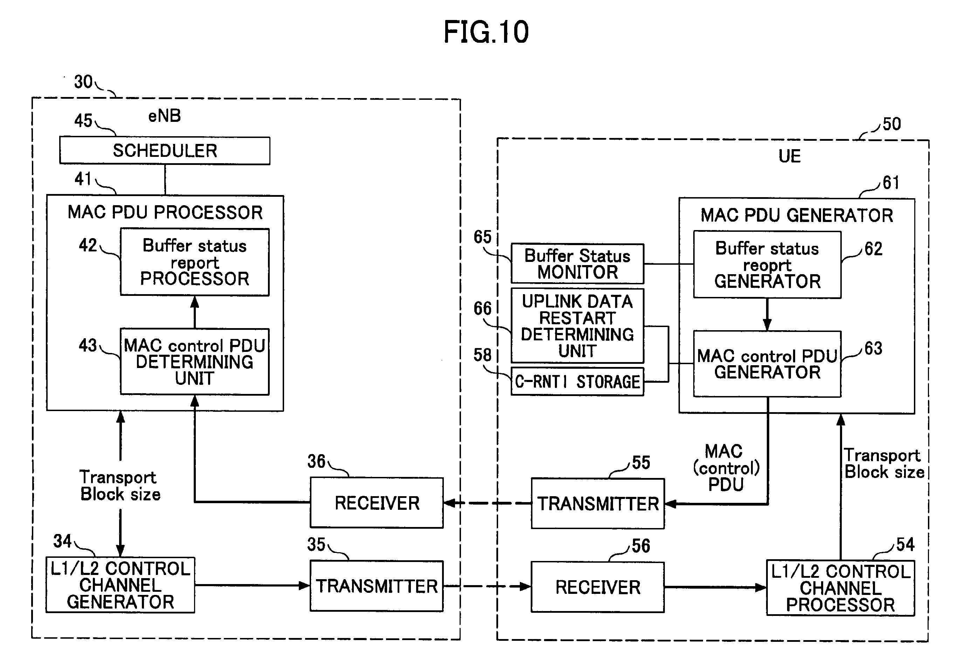

FIG. 10 is a block diagram illustrating the eNB and the UE of the second embodiment; The UE 50 has a MAC PDU generator 61, a buffer status monitor 65, an uplink data retransmission determining unit 66, a C-RNTI storage 58, an L1/L2 control channel processor 54, a transmitter 56, and a receiver 56. The MAC PDU generator 61 includes a buffer status report generator 62 and a MAC control PDU generator 63.

When a buffer status report trigger is generated at a controller (not shown), the UE 50 determines, at the uplink data restart determining unit 66, whether the present buffer status report is due to uplink data restart. If it is due to the uplink data restart, an RA preamble is transmitted prior to the buffer status report, and a request for uplink data restart is reported to the eNB, expecting a resource allocation for reporting the buffer status report. When a resource for reporting buffer status is allocated to the UE, the MAC control PDU generator 63, according to the result of determining of the uplink restart determining unit 66, multiplexes C-RNTIs stored in the C-RNTI storage 58 in the MAC control PDU, or generates a MAC control PDU without multiplexing. On the other hand, in response to the buffer status report trigger, the buffer status monitor 65 detects an amount held in the buffer per logical channel group, and provides the results to the MAC control PDU generator. The MAC control PDU generator 63 associates, with a group ID, an amount of each group that is held in a buffer to multiplex in the MAC control PDU. The L1/L2 control channel processor 54 takes out a TB size from an L1/L2 control channel received at the receiver 56 to provide to the MAC PDU generator 61.

The eNB 30 has a MAC PDU processor 41, an L1/L2 control channel generator 34, a transmitter 35, a receiver 36, and a scheduler 45. The MAC PDU processor 41 includes a buffer status report processor 42 and a MAC control PDU determining unit 43.

The MAC control PDU received at the receiver 36 is sent to the MAC control PDU determining unit 43. The MAC control PDU determining unit 43 looks at the MAC header to determine whether the MAC control PDU is a signal for reporting the buffer status, and whether the buffer status report includes the UE C-RNTI. Moreover, buffer status reports on how many groups are included may also be determined from the MAC control PDU TB size. Alternatively, when the MAC control PDU does not include a header, the MAC control PDU determining unit 43 may determine that the MAC control PDU is a buffer status report signal from an uplink resource block allocated according to a random access from a UE requesting uplink synchronization establishment, and a receive timing of the MAC control PDU.

When the MAC control PDU is a buffer status report signal (SI), this is supplied to the buffer status report processor 42. The buffer status report processor 42 takes out buffer status reports for each of the logical channel groups from the control message block of the MAC control PDU to analyze the reports taken out, and provides the results of the analysis to the scheduler 45. Moreover, when the MAC control PDU includes the C-RNTI, it is retrieved and stored in a C-RNTI storage. The scheduling section 45 performs scheduling for the UE 50 based on the analyzed buffer status reports (SI). Moreover, the L1/L2 control channel generated in the L1/L2 control channel generator 34 is transmitted from the transmitter 35.

In this way, the UE may generate and transmit a MAC control PDU of variable length according to N, the number of logical channel groups currently used. The eNB may look at a MAC header to determine whether the buffer status report is a normal scheduling status report signal, or scheduling information at the time of restarting data transmission after establishing uplink synchronization.

As described above, in any of the embodiments, it is possible to configure a variable-length MAC control PDU which varies in the size and number of control messages multiplexed according to circumstances while reducing the overhead of the MAC header to a minimum.

The present international application claims priority based on Japanese Patent Application No. 2007-050834, filed on February 28, 2007, the entire contents of which are hereby incorporated by reference.

## Claims

1. A method of generating a control signal, comprising the steps of:
generating one or more control messages to be transmitted; and
multiplexing the one or more control messages to generate a control message block to generate the control signal to be transmitted in a transport channel, wherein
the control message block varies in length according to the number of control messages multiplexed and/or the size of the control messages; and wherein
information on the number of control messages multiplexed and/or the size of the respective control messages is not included in the control signal.

2. The method of generating the control signal as claimed in claim 1, further comprising the step of:
adding a header to the control message block to generate the control signal, and including, in the header, information indicating what the control signal is related to.

3. The method of generating the control signal as claimed in claim 1, further comprising the step of generating an auxiliary physical control channel transmitted as an accompaniment to the transport channel, wherein information identifying a resource allocated for transmitting the control signal is transmitted to specify what the control signal is related to.

4. The method of generating the control signal as claimed in claim 1, wherein
the control message includes one or more random access responses generated in response to random access from one or more mobile stations,
wherein the random access response includes one or more preamble sequences used for random access by the respective mobile stations and necessary information according thereto, and
wherein the preamble sequence allows identifying a mobile station which has made the random access and the size of the necessary information.

5. The method of generating the control signal as claimed in claim 4, wherein
information necessary to configure the random access responses has a different data length according to an objective of the random access, and wherein
the objective of the random access and the data length of the necessary information are collated in advance.

6. The method of generating the control signal as claimed in claim 4, wherein the preamble sequences of one or more random access responses are arranged in an ascending or descending order.

7. The method of generating the control signal as claimed in claim 1, wherein the control message is a buffer status report corresponding to each of one or more logical channel groups currently used by a mobile station.

8. The method of generating the control signal as claimed in claim 7, wherein
the buffer status report is configured as fixed length information, and wherein
it is possible for the number of buffer status reports multiplexed to be identified from the fixed length and size of the control signal.

9. The method of generating the control signal as claimed in claim 7, wherein the buffer status report is variable length information including a group ID of the logical channel group and the corresponding buffer status report field, and the group ID and a length of the corresponding buffer status report field are collated in advance.

10. The method of generating a control signal as claimed in claim 7, wherein
the control signal is transmitted from the mobile station to a base station at the time of data transmit restart after establishing uplink synchronization, and
wherein
ID information on a network of the mobile station is inserted before the control message block to generate the control signal.

11. The method of generating the control signal as claimed in claim 7, wherein the control signal is transmitted using an uplink resource provided for buffer status reporting from the base station according to an uplink synchronization establishment request without including header information indicating that the control signal is the buffer status report.

12. The method of generating the control signal as claimed in claim 1, wherein the control messages multiplexed include control messages of different data lengths, and wherein
padding is added after the control message block when the control message block does not align per octet.

13. A radio base station apparatus, comprising:
a random access response generator which generates, when random access signals are received from one or more mobile stations in a radio subframe, one or more responses to the respective random access signals;
a control signal generator which multiplexes the one or more responses to generate a control message block to generate a control signal to send to the mobile station,
wherein
the control signal generator does not include, in the control signal, information on the number of random access responses multiplexed and/or the size of the random access responses.

14. The radio base station apparatus as claimed in claim 13, wherein the control signal generator adds a header to the message block and an indicator indicating that the control signal is a random access response is included in the header.

15. The radio base station apparatus as claimed in claim 13, further comprising:
an auxiliary physical control channel generator which generates an auxiliary physical control channel transmitted as an accompaniment to a channel used for transmitting the random access response, wherein
the auxiliary physical control channel generator includes, in the auxiliary physical control channel, an identifier indicating that a resource allocated for transmitting the control signal is a resource for transmitting the random access response.

16. The radio base station apparatus as claimed in claim 13, wherein
the random access response generator generates random access responses of different message lengths according to an objective of a random access from the one or more mobile stations, and wherein
the control signal generator multiplexes the random access responses of the different message lengths.

17. A mobile station, comprising:
a determining unit which determines, when a control signal transmitted from a base station in a transport channel is received, whether the control signal is a random access response according to a header of the control signal or an auxiliary physical control channel transmitted as an accompaniment to the transport channel, which determines whether the control signal is the random access response, and which determines whether a random access response is included that may be destined for an own station based on a preamble sequence included in a control message block of the control signal when the control signal is the random access response; and
a processor which analyzes, when the random access response is included that may be destined for the own station, the random access response which may be destined for the own station.

18. A radio base station apparatus, comprising:
a determining unit which determines, when a variable-length control signal transmitted in a transport channel from a mobile station is received, whether the control signal is a buffer status report;
a buffer status report processor which takes out, when the control signal is a buffer status report, held-in-buffer value information corresponding to each of one or more logical channel groups from a control message block following a header; and
a scheduler which schedules the mobile station based on the held-in-buffer value for each of the groups.

19. The base station apparatus as claimed in claim 18, wherein the determining unit determines whether the control signal is a buffer status report from the header of the control signal.

20. The radio base station apparatus as claimed in claim 18, further comprising: an auxiliary physical channel generator which generates an auxiliary physical control channel for transmitting uplink resource allocation information for an uplink data transmission restart in response to an uplink synchronization establishment request from the mobile station, wherein
the determining unit determines whether the control signal is a buffer status report from an uplink resource used for transmitting the control signal and a receive timing of the control signal.

21. The radio base station apparatus as claimed in claim 18, wherein the determining unit determines whether the control signal is transmitted at the time of data transmission restart of the mobile station, and wherein,
when the control signal is transmitted at the time of restart of data transmission, the buffer status report processor takes out identifying information which identifies the mobile station on a network from the control signal.

22. The radio base station apparatus as claimed in claim 18, wherein
the determining unit determines whether the control signal is transmitted at the data transmit restart time of the mobile station from an uplink resource used in transmitting the control signal and a receive timing of the control signal, and wherein
when the control signal is transmitted at the data transmit restart time, the buffer status report processor takes out identifying information identifying the mobile station on a network from the control signal.

23. A mobile station, comprising:
a buffer status report generator which generates a buffer status report indicating a held-in-buffer value for each of one or more logical channel groups presently used according to a buffer status report trigger; and
a control signal generator which multiplexes one or more buffer status reports to generate a control message block to generate a control signal to be transmitted in a transport channel, wherein the control signal generator does not include, in the control signal, information on the number of multiplexed buffer status reports.

24. The mobile station as claimed in claim 23, further comprising:
an uplink data restart determining unit which determines whether the buffer state trigger occurs in the uplink data transmit timing, wherein if the buffer state trigger occurs in the uplink data transmit timing, the control signal generator inserts an identifier for the mobile station on a network before the control message block to generate the control signal.
